(19)

**Europäisches Patentamt**
**European Patent Office**
**Office européen des brevets**

(11) **EP 4 674 718 A1**

(12) **EUROPEAN PATENT APPLICATION**

(43) Date of publication:
   **07.01.2026 Bulletin 2026/02**

(21) Application number: **24203862.8**

(22) Date of filing: **01.10.2024**

(51) International Patent Classification (IPC):
   **B60W 50/00** (2006.01)     **B60W 60/00** (2020.01)
   **G05D 1/633** (2024.01)     **G01C 21/00** (2006.01)
   **G05D 1/644** (2024.01)     **G05D 109/10** (2024.01)
   **G05D 101/20** (2024.01)

(52) Cooperative Patent Classification (CPC):
   **G05D 1/633; B60W 50/00; B60W 50/0097;**
   **B60W 60/00; B60W 60/0011; G05D 1/644;**
   B60W 2050/0014; B60W 2050/0088;
   B60W 2554/40; G05D 2101/20; G05D 2109/10

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(30) Priority: **02.07.2024 RO 202400386**

(71) Applicant: **NXP USA, Inc.**
   **Austin, TX 78735 (US)**

(72) Inventors:
   • **Diaconescu, Sabin Mihai**
    **5656AG Eindhoven (NL)**

   • **Taran, Alexandru Iulian**
    **5656AG Eindhoven (NL)**
   • **Madan, Teodor**
    **5656AG Eindhoven (NL)**
   • **Zheng, Dong**
    **5656AG Eindhoven (NL)**
   • **Laroche, Daniel Claude**
    **5656AG Eindhoven (NL)**
   • **Xu, Xiaoyin**
    **5656AG Eindhoven (NL)**

(74) Representative: **Miles, John Richard**
   **NXP Semiconductors**
   **Intellectual Property Group**
   **The Cattle Barn, Upper Ashfield Farm**
   **Hoe Lane**
   **Romsey, Hampshire SO51 9NJ (GB)**

(54) **ROBUST TRAJECTORY CONTROL**

(57) A computer-implemented method for controlling a vehicle in an environment is provided. The method comprises: during a first period, determining (601) values for a set of control parameters for controlling a trajectory of the vehicle using a first constraint regime; and in response to detecting a change in an environment complexity (603), during a second period, determining (605) values for the set of control parameters using a second constraint regime. The first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

During a first period, determine values for a set of control parameters (601)

↓

Detect a change in environment complexity (603)

↓

During a second period, determine values for a second set of control parameters (605)

↓

Replace the first set of control parameters with the second set (607)

**FIGURE 6**

## Description

### TEHCNICAL FIELD

The present disclosure relates to a method for controlling a vehicle in an environment and systems of doing the same.

### BACKGROUND

A primary objective in controlling a vehicle trajectory is preventing the vehicle from colliding with objects in the vehicle's environment. A significant problem therein is due to model uncertainties and environmental complexities that may cause control errors or failures during complex trajectory following manoeuvres. In simpler environments however, it is not necessary to expend lots of computational resources to compute complex trajectories.

It is desirable to provide a method of determining a set of control parameters that provide robustness guarantees, that is, the method explicitly deals with model and environment uncertainties.

### STATEMENTS OF INVENTION

According to a first aspect of the invention, there is provided a computer-implemented method for controlling a vehicle in an environment. The method comprises:

during a first period, determining values for a set of control parameters for controlling a trajectory of the vehicle using a first constraint regime;

in response to detecting a change in an environment complexity, during a second period, determining values for the set of control parameters using a second constraint regime, wherein:

the first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

The first period may be a finite time period. The second time period may be a finite time period. The first time period and second time period may have the same length. The second time period may have a starting time prior to the end time of the first time period. The set of control parameters may be a sequence of instructions for sending to an Automated Driving System (ADS), Advanced Driver Assistance System (ADAS), Engine Control Unit (ECU) (or similar) of a vehicle such that, when executed, the vehicle follows a determined trajectory towards an objective destination. A trajectory of the vehicle may be a path through physical space. In some embodiments, the trajectory of the vehicle may be a path through a space which includes physical space, velocity space, and acceleration space. The skilled person will recognise that any observable parameters may be included and controlled in the trajectory.

The method may comprise detecting the change in environment complexity.

Elastic tube model predictive control may comprise:

computing a tube for restricting the trajectory of the vehicle to an interior of the tube; and

determining the set of control parameters that guarantee the trajectory of the vehicle is within the interior of the tube; wherein the cross-section of the tube is a convex polytope defined by an intersection of a plurality of half-spaces and each of the plurality of half-spaces is independently adjustable.

A cross-section of the tube may the intersection of the tube with a hyper-plane that has the same dimensionality as the tube and is transverse to the tube. An intersection of a plurality of half-spaces may equivalently be the set of solutions to a system of linear inequalities, $Ax \leq b$, where $A$ is an $m \times n$ matrix, $x$ is a $n \times 1$ column vector, and b is a $m \times 1$ column vector, and m is the number of facets of the convex polytope of n is the dimensionality of the trajectory space. Adjusting each of the plurality of half-spaces may comprise adjusting independently each parameter of A and b. The skilled person will recognise that a vertex representation of convex polytopes is also possible and equally envisioned.

Homothetic tube model predictive control may comprise:

computing a tube for restricting the trajectory of the vehicle to an interior of the tube; and

determining the set of control parameters that guarantee the trajectory of the vehicle is within the interior of the tube; wherein the cross-section of the tube is a convex polytope and differs from a pre-determined convex polytope by an adjustable scale factor.

The pre-defined convex polytope may be defined as the convex polytope for elastic tube model predictive control, however the parameters of A and b are pre-determined and not adjustable. The convex polytope that differs from the pre-determined convex polytope by an adjustable scale factor may be the set of solutions to $\lambda Ax \le b$, where $\lambda$ is an adjustable parameter.

Rigid tube model predictive control may comprise:

computing a tube for restricting the trajectory of the vehicle to an interior of the tube; and
determining a set of control parameters that guarantee the trajectory of the vehicle is within the interior of the tube;
wherein the cross-section of the tube is a pre-determined convex polytope.

The pre-defined convex polytope may be defined as the pre-determined convex polytope for homothetic tube model predictive control.

The change in the environment complexity may comprise an increase in environment complexity. In this case, the second constraint regime may have more adjustable parameters than the first constraint regime. When the first constraint regime is a rigid tube model predictive control, the second constraint regime may be a homothetic tube model predictive control or an elastic tube model predictive control. When the first constraint regime is a homothetic tube model predictive control, the second constraint regime may be an elastic tube model predictive control.

In an alternative embodiment, the change in environment complexity may comprise a decrease in environment complexity. In which case, the second constraint regime may have fewer adjustable parameters than the first constraint regime. When the first constraint regime is an elastic tube model predictive control, the second constraint regime may be a homothetic tube model predictive control or a rigid tube model predictive control. When the first constraint regime is a homothetic tube model predictive control, the second constraint regime may be a rigid tube model predictive control.

Detecting a change in environment complexity may comprise a change in the number and/or class of objects detected in the environment. The change in the number of objects in the environment may be the absolute number of objects detected. Alternatively, the change in the number of objects detected in the environment may comprise classifying each object detected and detecting a change in the number of objects in each specific class.

The objects may be one of a pedestrian, a bicycle, or a vehicle. The skilled person will understand that other object classes are possible, and this list is not limiting.

The set of control parameters may comprise at least one of: a brake control, an accelerator control, a gearbox control, and a steering input. In some embodiments, the set of control parameters may further comprise an indicator light control.

Detecting a change in environment complexity may comprise performing semantic segmentation on sensor data obtained from a sensor system mounted to the vehicle.

The sensor system may comprise at least one of: radar, camera, lidar, inertial sensors, magnetometer, control position sensors, and/or drive train telemetry sensors. Control position sensors may comprise a steering wheel position sensor and a brake position sensor.

Performing semantic segmentation may comprise providing sensor data obtained from the sensor system to a trained machine learning model. The trained machine learning model may associate an object category to each data point in the sensor data in order to recognise a collection of data points that form a distinct object.

The method may be performed by a processor in the vehicle.

According to a second aspect of the invention, there is provided a system comprising one or more processors. The processors are configured to perform the steps of:

during a first period, determining values for a set of control parameters for controlling a trajectory of the vehicle using a first constraint regime;
in response to detecting a change in an environment complexity, during a second period, determining values for the set of control parameters using a second constraint regime, wherein:
the first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

The system of the second aspect may be configured to perform any of the method steps described with reference to the first aspect, including optional features thereof.

According to a third aspect of the invention, there is provided a vehicle comprising an imaging system and a system comprising one or more processors according to the second aspect of the invention. The imaging system is configured to image the environment proximal to the vehicle and determine the environment complexity. The system comprising one or more processors may be configured to receive the environment complexity.

According to a fourth aspect of the invention, there is provided a non-transient machine readable medium comprising instructions for configuring one or more processors to perform the steps of:

during a first period, determining values for a set of control parameters for controlling a trajectory of a vehicle using a first constraint regime; and

in response to determining a change in an environment complexity, during a second period, determining values for the set of control parameters using a second constraint regime, wherein:
the first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

The computer program of the fourth aspect may be configured to cause a computer to perform the method of the first aspect, including any optional features thereof.

These and other aspects of the invention will be apparent from, and elucidated with reference to, the embodiments described hereinafter.

## BRIEF DESCRIPTION OF FIGURES

Embodiments will be described, by way of example only, with reference to the drawings, in which:

Figure 1 is a diagram showing tube model predictive control;

Figure 2 is a diagram showing rigid tube model predictive control;

Figure 3 is a diagram showing homothetic tube model predictive control;

Figure 4 is a diagram showing elastic tube model predictive control;

Figure 5 is a flow diagram illustrating a method of controlling a vehicle in an environment; and

Figure 6 is a flow diagram illustrating a method of controlling a vehicle in an environment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

## DETAILED DESCRIPTION

The problem of providing a robust trajectory for a vehicle in an environment using tube model predictive control will first be described before going into detail about the specific embodiments.

Tube Model Predictive Control

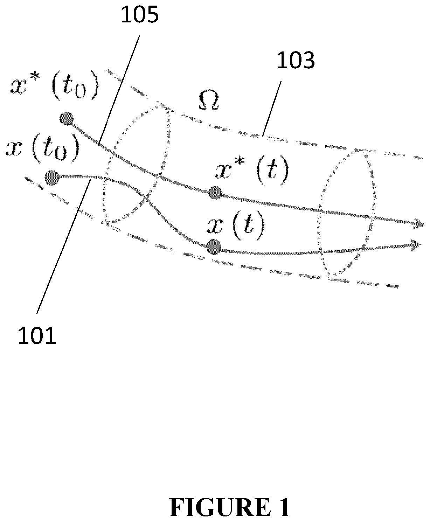

Tube model predictive control (TMPC) will be explained with reference to Figure 1. TMPC is a known method for providing robust controls in uncertain environments by explicitly taking into account uncertainties in the model as well as the environment.

The model can be written as:

$$x^+ = A(x) + B(x)u + w \qquad\qquad (1)$$

Where *x* describes a state of the vehicle 101, $x^+$ describes an updated state of the vehicle, u describes a control vector for controlling the vehicle, and w describes disturbances and uncertainties in the environment and the model. A(x) describes the dynamics of the vehicle and B(x) describes the vehicle's response to the control vector u.

In some embodiments, A(x) and B(x) are linear functions. In other embodiments, A(x) and B(x) are non-linear functions. The general nature of $A(x)$ and $B(x)$ are not limiting.

In TMPC, a Robust Control Invariant (RCI) tube 103 centred around a desired trajectory, $x^*$ 105 is computed. The RCI tube 103 is computed such that if the state of the vehicle 101 starts at a time $t_0$ in the RCI tube 103, then the state of the vehicle 101 will remain in the RCI tube 103 indefinitely for all realisations of the model error or environmental uncertainties. In this embodiment, the RCI tube 103 is computed for a finite receding horizon. The RCI tube 103 is computed such that the trajectory of the vehicle will avoid obstacles.

Computing an RCI tube 103 is well-known, and the details thereof shall not be expanded upon.

Other robust Model Predictive Control (MPC) algorithms, such as dynamic programming and scenario-tree based MPC, may be less suitable for systems with many states (higher than 3) and lead to an exponentially large number of scenarios for longer prediction horizons. Additionally, these other robust MPC algorithms are non-convex in nature and so are difficult to implement on hardware that may be installed in a vehicle (which may be subject to one or more of power, cooling, cost, volume, mass, and packaging constraints).

This means that using TMPC in robust vehicle control scenarios may be advantageous.

Rigid Tube Model Predictive Control

In rigid tube model predictive control (RTMPC), the RCI tube has a pre-determined cross-section. In some embodiments, the cross-section is a convex polytope.

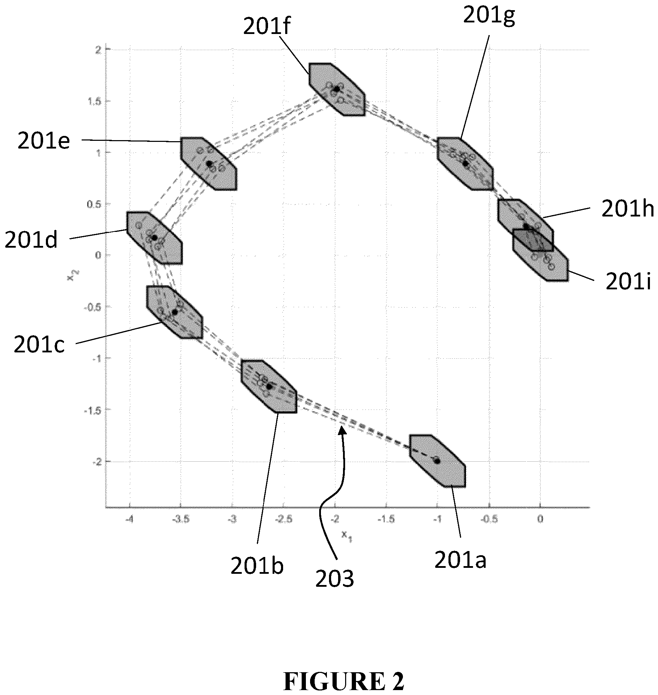

An example of RTMPC is described with respect to Figure 2.

A plurality of cross-sections of an RCI tube 201a-201i are shown. Each cross-section 201a-201i has the same geometry, in this example a convex hexagon. A plurality of trajectories 203 are shown originating from cross-section 201a and pass through each of the remaining plurality of cross-sections 201b-201i. Whilst this example has two state dimensions, and the cross-sections 201a-201i are polygons, the skilled person will recognise that the same principle can be extrapolated to higher dimensions.

Advantageously, computing an RCI tube using RTMPC requires limited computational resources since the cross-section of the RCI tube is pre-determined. Conversely, due to the rigidity of the cross-section of the RCI tube, RTMPC has difficulties in controlling a vehicle where there is a high degree of environmental uncertainty.

Consequently, RTMPC is well adapted at controlling a vehicle in environments with low uncertainties. In certain embodiments, the vehicle is a road vehicle, and the environment is a motorway.

Homothetic Tube Model Predictive Control

In homothetic tube model predictive control (HTMPC), the cross-section of the RCI tube is a homothetic copy (i.e., differs by a scale factor) of a pre-defined polytope.

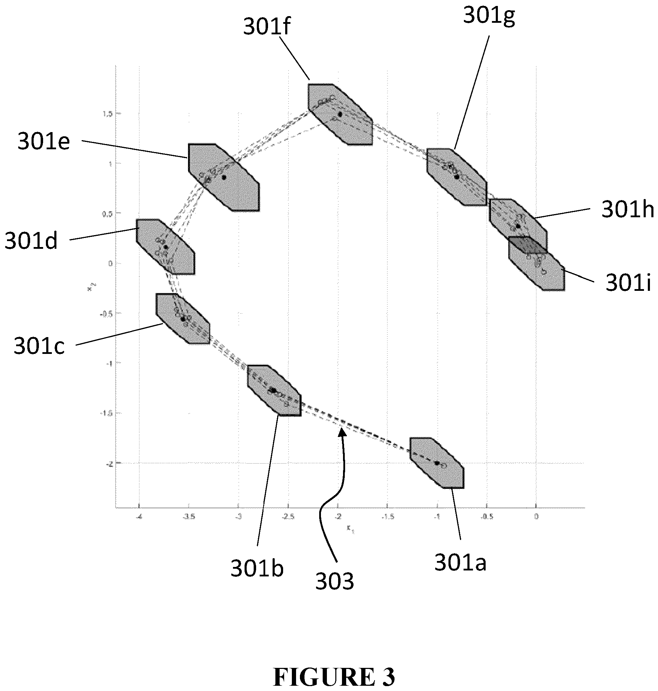

An example of HTMPC is described with respect to Figure 3.

A plurality of cross-sections of an RCI tube 301a-301i are shown. Each cross-section 301a-301i is a homothetic copy of a pre-defined polytope, presently a convex hexagon. A plurality of trajectories 303 are shown originating from cross-section 301a and pass through each of the remaining plurality of cross-sections 301b-301i. Whilst this example has two state dimensions, and the cross-sections 301a-301i are polygons, the skilled person will recognise that the same principle can be extrapolated to higher dimensions.

In comparison to RTMPC, HTMPC requires more computational resources since the scale factor is a parameter that is adjusted during the computation of the RCI tube. However, HTMPC is able to provide a higher degree of elasticity in order to avoid obstacles and environmental complexities when compared to RTMPC.

Elastic Tube Model Predictive Control

In elastic tube model predictive control (ETMPC), the cross-section of the RCI tube is a generic convex polytope.

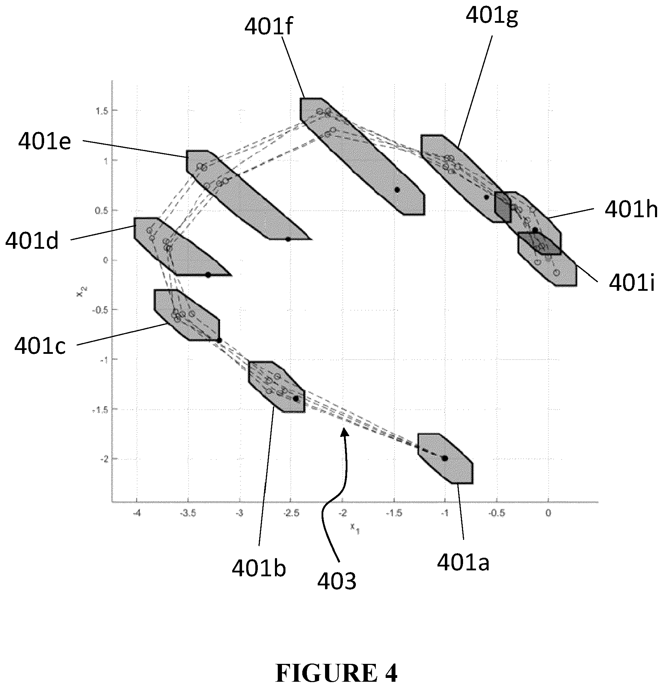

An example of ETMPC is described with respect to Figure 4.

A plurality of cross-sections of an RCI tube 401a-401i are shown. Each cross-section 401a-401i is a generic convex polytope, presently a convex polygon. A plurality of trajectories 403 are shown originating from cross-section 401a and pass through each of the remaining plurality of cross-sections 401b-401i. Whilst this example has two state dimensions, and the cross-sections 401a-401i are polygons, the skilled person will recognise that the same principle can be extrapolated to higher dimensions.

In comparison to RTMPC and HTMPC, ETMPC requires more computational resources since the cross-section is a generic convex polytope that can be adjusted during the computation of the RCI tube. However, ETMPC provides a higher degree of elasticity than RTMPC and HTMPC. Consequently, ETMPC can be appropriate when controlling a vehicle with a high degree of environmental uncertainty, such as in towns with pedestrians and bicycles proximal to the vehicle.

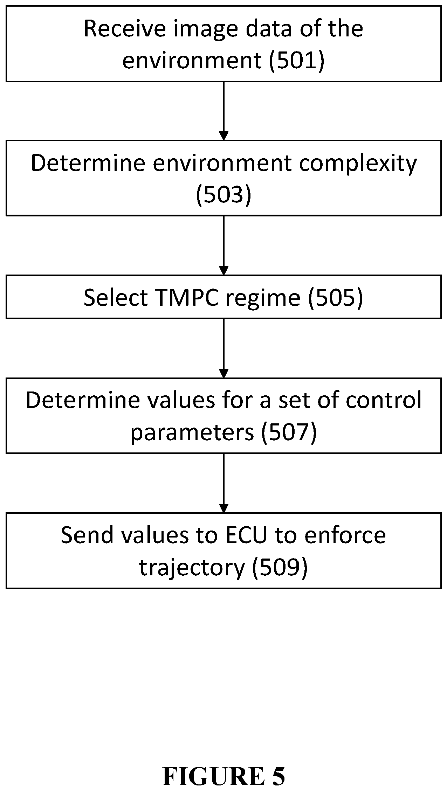

Turning to Figure 5, there is shown a flow diagram illustrating a method of controlling a vehicle in an environment.

At 501, image data from the environment proximal to the vehicle. Image data can be acquired using an on-board camera or a plurality of cameras configured to acquire panoramic images. Other image acquisition methods are equally possible such as lidar, the skilled person will recognise that any acquisition method that can gain information about an environment proximal to the vehicle can be equally used.

At 503, a complexity of the environment is determined based on the received image data. The complexity is determined using a machine learning model that performs semantic segmentation on the received image data. The machine learning model determines the number of objects belonging to each of a predefined class, such as pedestrian, cyclist, and vehicle. In an exemplary embodiment, the machine learning model then uses linear regression to combine the number of objects belonging to each of a predefined class and classify the complexity of the environment into one of "LOW", "MEDIUM", or "HIGH". Other methods of determining the complexity of the environment are equally envisaged.

At 505, a TMPC regime is selected based on the environmental complexity determined at 503. If the complexity of the environment is high, ETMPC is selected. If the complexity of the environment is medium, HTMPC is selected. If the complexity of the environment is low, RTMPC is selected.

At 507, values for a set of control parameters are determined using the TMPC regime selected at 505.

At 509, the values for a set of control parameters determined at 507 are sent to the Advanced Driver Assistance System (ADAS) of the vehicle to enforce the control of the vehicle's trajectory.

Advantageously, by selecting a TMPC regime based on the environment complexity use of computational resources can be optimised. When determining values for a set of control parameters 507 using ETMPC, more computational resources are required (when compared with homothetic or rigid tube model predictive control. In addition to power savings arising from using fewer computational resources (which may improve vehicle range), running computing resources at or near their maximum capacity may lead to overheating and shorter mean time between failure of the hardware. Embodiments of the invention may therefore make for more reliable and/or lower cost ADAS systems. It is desirable to optimise computational load and not require excessive calculations where simpler calculations provide acceptable solutions.

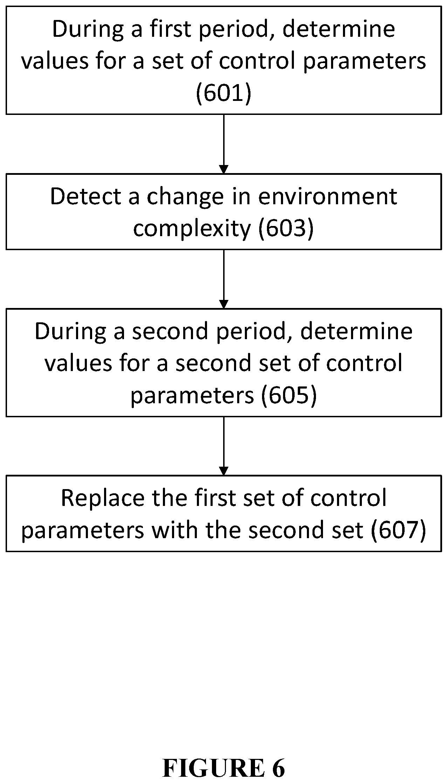

Turning to Figure 6, there is shown a flow diagram illustrating a method of controlling a vehicle in an environment.

At 601, values for a set of control parameters are determined for a first time period. This is performed using any one of ETMPC, HTMPC, or RTMPC. Values for control parameters are computed for a finite receding horizon.

At 603, a change in the environment complexity is detected. Environment complexity may be determined at regular intervals and in parallel to step 601. Environment complexity is determined in the same manner as in step 503. In the present embodiment, detecting a change in environment complexity 603 may comprise determining that the previous image processed by the machine learning model was classified into a different predefined complexity class than the present image.

At 605, values for a second set of control parameters are determined for a second time period. This is performed using a different control regime than the one used at 601, selected from ETMPC, HTMPC, and RTMPC. The choice of which control regime to use depends on the change in environment complexity detected in 603. Namely, if the environment complexity increases, the different control regime will be more elastic. If the environment complexity decreases, the different control regime will be more rigid.

At 607, the first values for the set of control parameters are replaced with the second values for the set of control parameters. Since the values are computed for a finite receding horizon, the first time period and second time period will overlap. In some embodiments, the remaining first values for the set of control parameters are replaced with the second values for the set of control parameters. In other embodiments, the remaining first values for the set of control parameters are kept so as to not have to recompute them. Alternatively, the remaining first values can be used as initialisation seeds to aid convergence of the second values for the set of control parameters.

A computer-implemented method for controlling a vehicle in an environment is provided. The method comprises: during a first period, determining (601) values for a set of control parameters for controlling a trajectory of the vehicle using a first constraint regime; and in response to detecting a change in an environment complexity (603), during a second period, determining (605) values for the set of control parameters using a second constraint regime. The first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

From reading the present disclosure, other variations and modifications will be apparent to the skilled person.

Such variations and modifications may involve equivalent and other features which are already known in the art of control theory and/or machine learning, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1.   A computer-implemented method for controlling a vehicle in an environment comprising:

during a first period, determining values for a set of control parameters for controlling a trajectory of the vehicle using a first constraint regime; and

in response to detecting a change in an environment complexity, during a second period, determining values for the set of control parameters using a second constraint regime, wherein:

the first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

2.   The computer-implemented method of claim 1, wherein elastic tube model predictive control comprises:

computing a tube for restricting the trajectory of the vehicle to an interior of the tube; and

determining the set of control parameters that guarantee the trajectory of the vehicle is within the interior of the tube;

wherein the cross-section of the tube is a convex polytope defined by an intersection of a plurality of half-spaces and each of the plurality of half-spaces is independently adjustable.

3.   The computer-implemented method of any preceding claim, wherein homothetic tube model predictive control comprises:

computing a tube for restricting the trajectory of the vehicle to an interior of the tube; and

determining the set of control parameters that guarantee the trajectory of the vehicle is within the interior of the tube;

wherein the cross-section of the tube is a convex polytope and differs from a pre-determined convex polytope by an adjustable scale factor.

4.   The computer-implemented method of any preceding claim, wherein rigid tube model predictive control comprises:

computing a tube for restricting the trajectory of the vehicle to an interior of the tube; and

determining the set of control parameters that guarantee the trajectory of the vehicle is within the interior of the tube;

wherein the cross-section of the tube is a pre-determined convex polytope.

5.   The computer-implemented method of any preceding claim, wherein the change in the environment complexity comprises an increase in environment complexity and the second constraint regime has more adjustable parameters than the first constraint regime.

6.   The computer-implemented method of any preceding claim, wherein detecting a change in environment complexity comprises determining a change in a number and/or class of objects detected in the environment.

7.  The computer-implemented method of claim 6, wherein the at least one object comprises one of a pedestrian, a bicycle, or a vehicle.

8.  The computer-implemented method of any preceding claim, wherein the set of control parameters comprises at least one of: a brake control, an accelerator control, a gearbox control, and a steering input.

9.  The computer-implemented method of any preceding claim, wherein detecting a change in environment complexity comprises performing semantic segmentation on sensor data obtained from a sensor system mounted to the vehicle.

10. The computer-implemented method of claim 9, wherein the sensor system comprises at least one of: radar, camera, lidar, inertial sensors, magnetometer, control position sensors, and/or drive train telemetry sensors.

11. The computer-implemented method of any preceding claim, wherein the method is performed by a processor in the vehicle.

12. A system comprising one or more processors, configured to perform the steps of:

    during a first period, determining values for a set of control parameters for controlling a trajectory of the vehicle using a first constraint regime;
    in response to detecting a change in an environment complexity, during a second period, determining values for the set of control parameters using a second constraint regime, wherein:
    the first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

13. A vehicle comprising an imaging system and a system according to claim 12, wherein:

    the imaging system is configured to image the environment proximal to the vehicle and determine the environment complexity; and
    the system of claim 12 is further configured to receive the environment complexity from the imaging system.

14. A non-transient machine readable medium comprising instructions for configuring one or more processors to perform the steps of:

    during a first period, determining values for a set of control parameters for controlling a trajectory of a vehicle using a first constraint regime;
    in response to detecting a change in an environment complexity, during a second period, determining values for the set of control parameters using a second constraint regime, wherein:
    the first constraint regime is one of elastic tube model predictive control, homothetic tube model predictive control, or rigid tube model predictive control and the second constraint regime is a different one of elastic tube model predictive control, homothetic tube model predictive control, or rigid tube model predictive control.

**FIGURE 1**

FIGURE 2

**FIGURE 3**

**FIGURE 4**

Receive image data of the
environment (501)

Determine environment complexity
(503)

Select TMPC regime (505)

Determine values for a set of control
parameters (507)

Send values to ECU to enforce
trajectory (509)

**FIGURE 5**

During a first period, determine values for a set of control parameters (601)

↓

Detect a change in environment complexity (603)

↓

During a second period, determine values for a second set of control parameters (605)

↓

Replace the first set of control parameters with the second set (607)

**FIGURE 6**

**EUROPEAN SEARCH REPORT**

Application Number

EP 24 20 3862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHI YANG ET AL: "Advanced model predictive control framework for autonomous intelligent mechatronic systems: A tutorial overview and perspectives", ANNUAL REVIEWS IN CONTROL, PERGAMON, AMSTERDAM, NL, vol. 52, 17 November 2021 (2021-11-17), pages 170-196, XP086892742, ISSN: 1367-5788, DOI: 10.1016/J.ARCONTROL.2021.10.008 [retrieved on 2021-11-17] * the whole document * | 1-14 | INV. B60W50/00 B60W60/00 G05D1/633 G01C21/00 G05D1/644 G05D109/10 G05D101/20 |
| A | JOHANNES KÖHLER ET AL: "Robust output feedback model predictive control using online estimation bounds", ARXIV.ORG, CORNELL UNIVERSITY LIBRARY, 201 OLIN LIBRARY CORNELL UNIVERSITY ITHACA, NY 14853, 7 May 2021 (2021-05-07), XP081959642, * the whole document * | 1-14 | |
| A | ANDRAS SASFI ET AL: "Robust adaptive MPC using control contraction metrics", ARXIV.ORG, CORNELL UNIVERSITY LIBRARY, 201 OLIN LIBRARY CORNELL UNIVERSITY ITHACA, NY 14853, 23 September 2022 (2022-09-23), XP091326524, * the whole document * | 1-14 | TECHNICAL FIELDS SEARCHED (IPC) B60W |

The present search report has been drawn up for all claims

| Place of search | Date of completion of the search | Examiner |
|---|---|---|
| Munich | 18 March 2025 | Laiou, M |

EPO FORM 1503 03.82 (P04C01)